# EUROPEAN PATENT APPLICATION

(11) **EP 4 467 687 A1**
(43) Date of publication of application: **27.11.2024**
(21) Application number: 22935763.7
(22) Date of filing: 23.12.2022
(51) Int. Cl.: C25D 5/10, C25D 3/46, C25D 5/12, C25D 7/00, H01R 13/03

(54) **SILVER-PLATED MATERIAL AND METHOD FOR PRODUCING SAME**

(30) Priority: 31.03.2022 JP 2022059229; 28.11.2022 JP 2022188961
(71) Applicant: Dowa Metaltech Co., Ltd., Tokyo 101-0021 (JP)
(72) Inventor: FUNADA, Eri, Tokyo 101-0021 (JP); ARAI, Kentaro, Tokyo 101-0021 (JP); SATO, Yosuke, Tokyo 101-0021 (JP); HIRAI, Yutaro, Tokyo 101-0021 (JP)
(74) Representative: Manitz Finsterwald Patent- und Rechtsanwaltspartnerschaft mbB
(86) International application number: PCT/JP2022/047637
(87) International publication number: WO 2023/188637

(57) **Abstract**

There are provided a silver-plated product which is difficult to allow a silver-plating film to be peeled off from an underlying plating film to have an excellent adhesion in a high-temperature and high-humidity environment when the silver-plating film is formed on a base material via the underlying plating film, and a method for producing the same. After an underlying silver-plating film (preferably having a thickness of 0.06 to 15 um) is formed on a base material (of preferably copper or a copper alloy) via an underlying plating film (of preferably copper, nickel or an alloy thereof), a surface layer of silver containing carbon and sulfur (a silver-plating film containing carbon and sulfur) (preferably having a thickness of 0.1 to 2.0 *µ*m) is formed on the underlying silver-plating film by electroplating in a silver-plating solution which is an aqueous solution containing silver potassium cyanide or silver cyanide, potassium cyanide or sodium cyanide, and a benzothiazole or a derivative thereof.

## Description

### Technical Field

The present invention generally relates to a silver-plated product and a method for producing the same. More specifically, the invention relates to a silver-plated product used as the material of contact and terminal parts, such as connectors, switches and relays, which are used for on-vehicle and/or household electric wiring, and a method for producing the same.

### Background Art

As conventional materials of contact and terminal parts, such as connectors and switches, there are used plated products wherein a base material of copper, a copper alloy, stainless steel or the like, which are relatively inexpensive and which have excellent corrosion resistance, mechanical characteristics and so forth, is plated with tin, silver, gold or the like in accordance with required characteristics, such as electrical and soldering characteristics.

Tin-plated products obtained by plating a base material of copper, a copper alloy, stainless steel or the like, with tin are inexpensive, but they do not have good corrosion resistance in a high-temperature environment. Gold-plated products obtained by plating such a base material with gold have excellent corrosion resistance and high reliability, but the costs thereof are high. On the other hand, silver-plated products obtained by plating such a base material with silver are inexpensive in comparison with gold-plated products and have excellent corrosion resistance in comparison with tin-plated products.

The materials of contact and terminal parts, such as connectors and switches, are also required to have good wear resistance against the insertion and extraction of connectors and/or the sliding movements of switches.

However, silver-plated products are soft and easy to wear. For that reason, if the silver-plated product is used as the material of a connecting terminal or the like, there is a problem in that the adhesion thereof is caused by the insertion and extraction and/or the sliding movement to easily cause the adhesive abrasion thereof. There is also a problem in that the surface of the connecting terminal or the like is shaved to enhance the coefficient of friction thereof to enhance the insertion force thereof when the connecting terminal is inserted.

In order to solve such problems, there is known a method for improving the hardness of the silver-plated product by causing the silver-plating film thereof to contain an element, such as antimony (see, e.g., Patent Document 1).

However, if the silver-plating film is caused to contain an element, such as antimony, as the method of Patent Document 1, the improvement of the wear resistance is not sufficient although silver is alloyed to improve the hardness thereof. For that reason, it is desired to provide a silver-plated product having a more excellent wear resistance.

In order to solve such problems, there is proposed a method for producing a silver-plated product which has a more excellent wear resistance than that of conventional silver-plated products, the method comprising the steps of: preparing a silver-plating solution which is an aqueous solution containing silver potassium cyanide or silver cyanide, potassium cyanide or sodium cyanide, and a benzothiazole or a derivative thereof; and forming a surface layer of silver on a base material by electroplating at a liquid temperature and at a current density in the silver-plating solution so as to satisfy (BC/A) ²/D ≧ 10 (°C²· dm²/A) assuming that a concentration of free cyanide in the silver-plating solution is A (g/L), that a concentration of a benzothiazole content of the benzothiazole or derivative thereof in the silver-plating solution is B (g/L), that the liquid temperature of the silver-plating solution is C (°C) and that the current density during the electroplating is D (A/dm²) (see, e.g., Patent Document 2).

### Prior Art Document(s)

### Patent Document(s)

Patent Document 1: JP 2009-79250 A (Paragraph Numbers 0003-0004)
Patent Document 2: JP 6916971 B (Paragraph Number 0013)

### Summary of the Invention

### Problem to be solved by the Invention

However, in the silver-plated product produced by the method of Patent Document 2, there is a problem in that a silver-plating film is easy to be peeled off from an underlying plating film in a high-temperature and high humidity environment if the silver-plating film is formed on a base material via the underlying plating film.

For that reason, in the silver-plated product which is produced by the method of Patent Document 2 and which has an excellent wear resistance, it is desired to provide a silver-plated product which is difficult to allow a silver-plating film to be peeled off from an underlying plating film to have an excellent adhesion in a high-temperature and high-humidity environment when the silver-plating film is formed on a base material via the underlying plating film.

It is therefore an object of the present invention to eliminate the aforementioned conventional problems and to provide a silver-plated product which is difficult to allow a silver-plating film to be peeled off from an underlying plating film to have an excellent adhesion in a high-temperature and high-humidity environment when the silver-plating film is formed on a base material via the underlying plating film, and a method for producing the same.

### Means for solving the Problem

In order to accomplish the aforementioned object, the inventors have diligently studied and found that it is possible to produce a silver-plated product which is difficult to allow a silver-plating film to be peeled off from an underlying plating film to have an excellent adhesion in a high-temperature and high-humidity environment when the silver-plating film is formed on a base material via the underlying plating film, if a surface layer of silver containing carbon and sulfur (i.e., a silver plating film containing carbon and sulfur) is formed on an underlying silver-plating film by electroplating in a silver-plating solution, which is an aqueous silver-plating solution containing silver potassium cyanide or silver cyanide, potassium cyanide or sodium cyanide, and a benzothiazole or a derivative thereof, after the underlying silver-plating film is formed on a base material via an underlying plating film.

According to the present invention, there is provided a method for producing a silver-plated product, the method comprising the steps of: preparing a silver-plating solution which is an aqueous solution containing silver potassium cyanide or silver cyanide, potassium cyanide or sodium cyanide, and a benzothiazole or a derivative thereof; forming an underlying silver-plating film on a base material via an underlying plating film; and forming a surface layer of silver on the underlying silver-plating film by electroplating in the prepared silver-plating solution, the surface layer containing carbon and sulfur.

In this method for producing a silver-plated product, the underlying silver-plating film preferably has a thickness of 0.06 to 15 *µ* m. The benzothiazole is preferably a mercaptobenzothiazole. The derivative of the benzothiazole is preferably an alkali metallic salt of the benzothiazole, and the alkali metallic salt is preferably a sodium salt. The underlying plating film is preferably made of copper, nickel or an alloy thereof, and the base material is preferably made of copper or a copper alloy.

According to the present invention, there is provided a silver-plated product comprising: a base material; an underlying plating film formed on the base material; an underlying silver-plating film formed on the underlying plating film; and a surface layer of silver formed on the underlying silver-plating film, the surface layer containing carbon and sulfur, wherein an atomic concentration of Ag in the underlying silver-plating film is higher than 95 at%, and an atomic concentration of S in the underlying silver-plating film is lower than 0.6 at%, a percentage of an atomic concentration of C to the atomic concentration of Ag in the underlying silver-plating film being lower than 3 %, and wherein an atomic concentration of Ag in the surface layer of silver containing carbon and sulfur is not higher than 95 at%, and an atomic concentration of S in the surface layer of silver containing carbon and sulfur is not lower than 0.6 at%, a percentage of an atomic concentration of C to the atomic concentration of Ag in the surface layer of silver containing carbon and sulfur being not lower than 3 %.

In this silver-plated product, the underlying silver-plating film preferably has a thickness of 0.06 to 15 *µ* m. The average crystallite size of silver in the silver-plated product is preferably not greater than 100 nm. The surface of the silver-plated product preferably has a Vickers hardness HV of 70 to 160. The underlying plating film is preferably made of copper, nickel or an alloy thereof, and the base material is preferably made of copper or a copper alloy. The total of the atomic concentration of S derived from a mercapto group of a sodium mercaptobenzothiazole in the surface layer of silver containing carbon and sulfur and the atomic concentration of S derived from a five membered ring of the sodium mercaptobenzothiazole therein is preferably not lower than 0.3 at%, and the total of the atomic concentration of S derived from a mercapto group of a sodium mercaptobenzothiazole in the underlying silver-plating film and the atomic concentration of S derived from a five membered ring of the sodium mercaptobenzothiazole therein is preferably lower than 0.3 at%. The total of the atomic concentration of S obtained from spectra, which have a peak in a range of from 161.6 eV to 162.9 eV, and the atomic concentration of S obtained from spectra, which have a peak in a range of from 163.2 eV to 164.5 eV, is preferably not lower than 0.3 at%, when the surface layer of silver containing carbon and sulfur are measured by the X-ray photoelectron spectroscopy, and the total of the atomic concentration of S obtained from spectra, which have a peak in a range of from 161.6 eV to 162.9 eV, and the atomic concentration of S obtained from spectra, which have a peak in a range of from 163.2 eV to 164.5 eV, is preferably lower than 0.3 at%, when the underlying silver-plating film are measured by the X-ray photoelectron spectroscopy.

### Effects of the Invention

According to the present invention, it is possible to provide a silver-plated product which is difficult to allow a silver-plating film to be peeled off from an underlying plating film to have an excellent adhesion in a high-temperature and high-humidity environment when the silver-plating film is formed on a base material via the underlying plating film, and a method for producing the same.

### Brief Description of the Drawings

FIG. 1 is a scanning electron micrograph (SEM image) of a cross-section of a silver-plated product which is produced in Example 10 and which is observed at a magnification of 50,000; and
FIG. 2 is a SEM image of a cross-section of a silver-plated product which is produced in Comparative Example 1 and which is observed at a magnification of 50,000.

### Mode for Carrying Out the Invention

In the preferred embodiment of a method for producing a silver-plated product according to the present invention, a silver strike plating film is formed on a base material (of preferably copper or a copper alloy) via an underlying plating film (of preferably copper, nickel or an alloy thereof) (preferably having a thickness of 0.01 to 10 *µ* m, more preferably having a thickness of 0.5 to 2 *µ* m). Then, an underlying silver-plating film (preferably having a thickness of 0.06 to 15 *µ* m, more preferably having a thickness of 0.10 to 10 *µ* m and most preferably having a thickness of 0.15 to 5 *µ* m, the thickness of the underlying silver-plating film containing the thickness of the silver strike plating film) is formed on the silver strike plating film. Then, a surface layer of silver (preferably having a thickness of 0.1 to 5.0 *µ* m, more preferably having a thickness of 0.5 to 3.0 *µ* m and most preferably having a thickness of 0.5 to 2.0 *µ* m), the surface layer containing carbon and sulfur, is formed on the underlying silver-plating film by electroplating in a silver-plating solution which is an aqueous solution containing silver potassium cyanide or silver cyanide, potassium cyanide or sodium cyanide, and a benzothiazole or a derivative thereof.

The underlying silver-plating film can be formed by electroplating at a current density of 1 to 10 A/cm² for 1 to 90 seconds in a silver-plating solution which is an aqueous solution containing silver potassium cyanide (KAg(CN)₂), potassium cyanide (KCN) and selenium.

Furthermore, benzothiazole (C₂H₆NS) is a heterocyclic compound having a benzene skeleton and a thiazole skeleton. The benzothiazole is preferably a benzothiazole having a mercapto group (-SH), such as 2-mercaptobenzothiazole. As the derivative of the benzothiazole, there may be used sodium 2-mercaptobenzothiazole (sodium mercaptobenzothiazole (SMBT)), zinc-2-mercaptobenzothiazole, 5-chloro-2-mercaptobenzothiazole, 6-amino-2-mercaptothiazole, 6-nitro-2-mercaptobenzothiazole, 2-mercapto-5-methoxybenzothiazole or the like. Among these derivatives of the benzothiazole, the alkali metallic salt of the benzothiazole is preferably used, and the sodium salt of the benzothiazole, such as sodium 2-mercaptobenzothiazle (sodium mercaptobenzothiazole (SMBT)), is preferably used.

If a benzothiazole (such as a mercaptobenzothiazole) or an alkali metallic salt (preferably sodium salt) thereof is thus added to a (cyanide-containing) silver-plating solution as an organic addition agent to carry out electroplating (silver-plating) therein, it is considered that it is possible to incorporate (at least a part of) the organic addition agent into the surface layer of silver to decrease the coefficient of friction of the surface layer by the lubricating effect of the organic addition agent. Furthermore, if the mercaptobenzothiazole is used as the benzothiazole, it is possible to improve the production efficiency of the silver-plated product. If the organic addition agent is thus incorporated into the surface layer of silver, when the silver-plated product is used as the material of a connecting terminal or like, it is possible to suppress the adhesion due to the insertion and extraction and/or the sliding movement to improve the wear resistance thereof. In particular, if the electroplating is carried out on the above-described conditions, it is possible to produce a silver-plated product having a more excellent wear resistance than that of conventional silver-plated products.

In the above-described method for producing a silver-plated product, the concentration of free cyanide in the silver-plating solution is preferably 3 to 70 g/L (more preferably 10 to 70 g/L, most preferably 15 to 60 g/L), and the concentration of the benzothiazole content in the silver-plating solution is preferably 2 to 100 g/L (more preferably 5 to 90 g/L, still more preferably 8 to 80 g/L, most preferably 10 to 70 g/L). The concentration of silver in the silver-plating solution is preferably 15 to 140 g/L (more preferably 15 to 125 g/L, most preferably 20 to 110 g/L). The concentration of silver potassium cyanide or silver cyanide in the silver-plating solution is preferably 30 to 260 g/L (more preferably 30 to 225 g/L, most preferably 35 to 220 g/L), and the concentration of potassium cyanide or sodium cyanide in the silver-plating solution is preferably 10 to 200 g/L (more preferably 20 to 185 g/L, still more preferably 30 to 160 g/L, most preferably 40 to 115 g/L). The concentration of the benzothiazole or alkali metallic salt thereof is preferably 3 to 100 g/L (more preferably 10 to 90 g/L, most preferably 15 to 80 g/L). The electroplating (silver-plating) is preferably carried out at a liquid temperature of 15 to 50 °C and more preferably carried out at a liquid temperature of 18 to 47 °C . The electroplating (silver-plating) is preferably carried out at a current density of 0.5 to 12 A/dm² and more preferably carried out at a current density of 1.5 to 10 A/dm². Furthermore, in order to form a good silver-plating film, the current density is preferably a relatively high current density of not lower than 2 A/dm², and more preferably a current density of not lower than 3 A/dm² .

In the preferred embodiment of a silver-plated product according to the present, a silver strike plating film is formed on a base material (of preferably copper or a copper alloy) via an underlying plating film (of preferably copper, nickel or an alloy thereof) (preferably having a thickness of 0.01 to 10 *µ* m, more preferably having a thickness of 0.5 to 2 *µ* m) . On this silver strike plating film, there is formed an underlying silver-plating film (preferably having a thickness of 0.06 to 15 *µ* m, more preferably having a thickness of 0.10 to 10 *µ* m and most preferably having a thickness of 0.15 to 5 *µ* m, the thickness of the underlying silver-plating film containing the thickness of the silver strike plating film) (an underlying silver-plating film, such as a bright silver-plating film or a matte silver-plating film). On this underlying silver-plating film, there is formed a surface layer of a silver (preferably having a thickness of 0.1 to 5.0 *µ* m, more preferably having a thickness of 0.5 to 3.0 *µ* m and most preferably having a thickness of 0.5 to 2.0 *µ* m), the surface layer containing carbon and sulfur. The atomic concentration of Ag in the underlying silver-plating film is higher than 95 at% (preferably not lower than 97 at%). The atomic concentration of S in the underlying silver-plating film is lower than 0.6 at% (preferably not higher than 0.5 at%). The percentage of the atomic concentration of C to the atomic concentration of Ag in the underlying silver-plating film is lower than 3 % (preferably not higher than 2 %). The atomic concentration of Ag in the surface layer of silver containing carbon and sulfur is not higher than 95 at% (preferably not lower than 80 at%, and preferably not higher than 93 at%) . The atomic concentration of S in the surface layer of silver containing carbon and sulfur is not lower than 0.6 at% (preferably not lower than 0.7 at%, and preferably not higher than 5 at%). The percentage of the atomic concentration of C to the atomic concentration of Ag in the surface layer of silver containing carbon and sulfur is not lower than 3 % (preferably not lower than 5 %, and preferably not higher than 20 %). The average crystallite size of silver in the silver-plated product is preferably not greater than 100 nm. The surface of the silver-plated product preferably has a Vickers hardness HV of 70 to 160. The total of the atomic concentration of S derived from a mercapto group of a sodium mercaptobenzothiazole in the surface layer of silver containing carbon and sulfur and the atomic concentration of S derived from a five membered ring of the sodium mercaptobenzothiazole therein is preferably not lower than 0.3 at%, and more preferably not lower than 0.4 at%. The total of the atomic concentration of S derived from a mercapto group of the sodium mercaptobenzothiazole in the underlying silver-plating film and the atomic concentration of S derived from a five membered ring of the sodium mercaptobenzothiazole therein is preferably lower than 0.3 at%, and more preferably not higher than 0.2 at%. The total of the atomic concentration of S obtained from spectra, which have a peak in the range of from 161.6 eV to 162.9 eV, and the atomic concentration of S obtained from spectra, which have a peak in the range of from 163.2 eV to 164.5 eV, is preferably not lower than 0.3 at%, and more preferably not lower than 0.4 at%, when the surface layer of silver containing carbon and sulfur are measured by the X-ray photoelectron spectroscopy. The total of the atomic concentration of S obtained from spectra, which have a peak in the range of from 161.6 eV to 162.9 eV, and the atomic concentration of S obtained from spectra, which have a peak in the range of from 163.2 eV to 164.5 eV, is preferably lower than 0.3 at%, and more preferably not higher than 0.2 at%, when the underlying silver-plating film are measured by the X-ray photoelectron spectroscopy.

### Examples

Examples of a silver-plated product and a method for producing the same according to the present invention will be described below in detail.

### [Example 1]

First, a rolled sheet of oxygen-free copper (C1020 1/2H) having a size of 67 mm x 50 mm x 0.3 mm was prepared as a base material (a material to be plated). As the pretreatment of the material, the material and a SUS plate were put in an alkali degreasing solution to be used as a cathode and an anode, respectively, to electrolytic-degrease the material at 5 V for 30 seconds. The material thus electrolytic-degreased was washed with water, and then, pickled for 15 seconds in a 3% sulfuric acid to be washed with water.

Then, the material thus pretreated and a nickel electrode plate were used as a cathode and an anode, respectively, to electroplate (dull-nickel-plate) the material at a liquid temperature of 50 °C and at a current density of 7 A/dm² for 70 seconds in an aqueous dull-nickel-plating solution containing 540 g/L of nickel sulfamate tetrahydrate, 25 g/L of nickel chloride and 35 g/L of boric acid, while stirring the solution at 500 rpm by means of a stirrer. After a dull-nickel-plating film was thus formed as an underlying plating film, the thickness of the central portion of the underlying plating film was measured by means of an X-ray fluorescent analysis thickness meter (SFT-110A produced by Hitachi High-Tech Science Corporation). As a result, the thickness was 1 *µ* m.

Then, the material having the underlying plating film and a titanium electrode plate coated with platinum were used as a cathode and an anode, respectively, to electroplate the material at a room temperature (25 °C) and at a current density of 2.0 A/dm² for 10 seconds in an aqueous silver strike plating solution containing 3 g/L of silver potassium cyanide (KAg(CN)₂) and 90 g/L of potassium cyanide (KCN), while stirring the solution at 500 rpm by means of a stirrer. After a silver strike plating film having a thickness of about 0.01 *µ* m was thus formed, the silver-strike-plated material was washed with water for sufficiently washing away the silver strike plating solution.

Then, the silver-strike-plated material and a silver electrode plate were used as a cathode and an anode, respectively, to electroplate (silver-plate) the material at a liquid temperature of 18 °C and at a current density of 2.3 A/dm² for 3 seconds in an aqueous silver-plating solution containing 175 g/L of silver potassium cyanide (KAg(CN)₂), 95 g/L of potassium cyanide (KCN) and potassium selenocyanate (a silver-plating solution containing 37 mg/L of selenium), while stirring the solution at 500 rpm by means of a stirrer. The thickness of the central portion of an underlying silver-plating film thus formed (the thickness of the central portion of the underlying silver-plating film containing the silver strike plating film) was measured by means of the above-described X-ray fluorescent analysis thickness meter. As a result, the thickness was 0.06 *µ* m.

Then, the underlying silver-plated material and a silver electrode plate were used as a cathode and an anode, respectively, to electroplate (silver-plate) the material at a liquid temperature of 35 °C and at a current density of 7 A/dm² for 18 seconds in an aqueous silver-plating solution containing 175 g/L of silver potassium cyanide (KAg(CN)₂), 95 g/L of potassium cyanide (KCN) and 30 g/L of sodium 2-mercaptobenzothiazole (sodium mercaptobenzothiazole (SMBT)) (a silver-plating solution containing 95 g/L of silver, 38 g/L of free cyanide and 21 g/L of benzothiazole content (BT)), while stirring the solution at 500 rpm by means of a stirrer. The thickness of the central portion of a silver-plating film thus formed was measured by means of the above-described X-ray fluorescent analysis thickness meter. As a result, the thickness was 1.06 *µ* m. Furthermore, the concentrations of free cyanide and benzothiazole content were calculated by Concentration of Free Cyanide = Concentration of KCN x (26.02 (Molecular Weight of CN) / 65.12 (Molecular Weight of KCN)), and by Concentration of Benzothiazole Content = Concentration of SMBT x (135.19 (Molecular Weight of Benzothiazole (C₇H₅NS)) / 189.23 (Molecular Weight of SMBT)), respectively.

The Vickers hardness HV of the surface (upper three portions) of a silver-plated product thus obtained was measured in accordance with JIS Z2244 by applying a measuring load of 10 gf for 10 seconds by means of a micro-hardness testing machine (HM-221 produced by Mitutoyo Corporation). As a result, the Vickers hardness HV was 139.2 on average.

Two silver-plated products, each of which was the same as the above-described silver-plated product, were prepared, one of the silver-plated products being indented (Inside R = 1.5 mm) to be used as an indenter, and the other of the silver-plated products being used as a plate-shaped evaluation sample. Then, the wear resistance of the evaluation sample was evaluated by carrying out an abrasion test for confirming the abrasion status of the evaluation sample by observing the central portion of the sliding scratch of the evaluation sample at a magnification of 100 by means of a microscope (VHX-1000 produced by Keyence Corporation) when the reciprocating sliding movement (sliding distance = 5 mm, sliding speed = 1.67 mm/s) was continued until the base material was exposed while the indenter was pushed against the evaluation sample at a constant load (5N) by means of a precision sliding testing apparatus (CRS-G2050-DWA produced by Yamasaki-Seiki Laboratory Co., Ltd.). As a result, it was confirmed that the base material was not exposed after the reciprocating sliding movement was repeated 400 times, so that it was found that the wear resistance thereof was good.

Two silver-plated products, each of which was the same as the above-described silver-plated product, were prepared, one of the silver-plated products being indented (Inside R = 1.5 mm) to be used as an indenter, and the other of the silver-plated products being used as a plate-shaped evaluation sample. Then, a precision sliding testing apparatus (CRS-G2050-DWA produced by Yamasaki-Seiki Laboratory Co., Ltd.) was used for carrying out the reciprocating sliding movement (sliding distance = 5 mm, sliding speed = 1.67 mm/s) while the indenter was pushed against the evaluation sample at a constant load (5N). The forces applied in the horizontal directions during the above-described reciprocating sliding movement were measured to obtain a maximum value F thereof, and the coefficient ( *µ* ) of dynamic friction between the plate-shaped test piece and the indented test piece was calculated from *µ* = F/N. As a result, the maximum value of the coefficient of dynamic friction was 0.39.

The crystallite sizes in vertical directions to each crystal plane of (111), (200), (220) and (311) planes on the surface of the silver-plated product were calculated by the Scherrer's equation from the full-width at half maximum of each of peaks ((111) peak appearing at about 38° , (200) peak appearing at about 44° , (220) peak appearing at about 64° and (311) peak appearing at about 77° ) on the crystal planes on an X-ray diffraction pattern (XRD pattern) obtained by means of an X-ray diffractometer (Full-Automatic Multi-Purpose Horizontal X-ray diffractometer, Smart Lab produced by RIGAKU Corporation). The calculated crystallite sizes were weighted on the basis of the orientation ratio of each of the crystal planes to calculate an average crystallite size by the weighted average of the crystallite sizes on the crystal planes. As a result, the average crystallite size of silver in the silver-plated product was 161.6 angstroms (16.16 nm). Furthermore, as the above-described orientation ratio, there was used a value (corrected intensity) which was corrected by dividing each of the X-ray diffraction peak intensities (the intensities at X-ray diffraction peaks) on the (111), (200), (220) and (311) planes of the silver-plating film by each of the relative intensity ratios (the relative intensity ratios during the measurement of powder) ((111) : (200): (220) : (311) = 100 : 40 : 25 : 26) described on JCPDS card No.4 07 83, the X-ray diffraction peak intensities being obtained from the X-ray diffraction pattern obtained by scanning in a scanning field 2 *θ* / *θ* using a Cu tube and a K *β* filter method by means of an X-ray diffractometer (XRD) (Full-Automatic Multi-Purpose Horizontal X-ray diffractometer, Smart Lab produced by RIGAKU Corporation).

After the obtained silver-plated product was heated at 350 °C for 1 minute, an adhesive tape (cellophane tape produced by NICHIBAN Co., Ltd.) was applied on the surface of the silver-plated product to carry out the crosscut tape peeling test in accordance with JIS H8504 to evaluate the presence of separation of the silver-plating film with the naked eye. As a result, the silver-plating film was not peeled off, so that the adhesion of the silver-plating film was good.

After the obtained silver-plated product was heated at 350 °C for 1 minute, the 180° adhesion bending thereof was carried out, and then, the retorsion thereof was carried out to evaluate the presence of the separation of the silver-plating film with the naked eye. As a result, the silver-plating film was not peeled off, so that the adhesion of the silver-plating film was good.

Two silver-plated products, each of which was the same as the above-described silver-plated product, were prepared to be put in a temperature and humidity testing chamber (TPAV-48-20 produced by Isuzu Seisakusho Co. Ltd.) which was set at a temperature of 85 °C and a humidity of 85 %. After 240 hours and 500 hours, respectively, an adhesive tape (cellophane tape produced by NICHIBAN Co., Ltd.) was applied on the surface of each of the silver-plated products to carry out the crosscut tape peeling test in accordance with JIS H8504 to evaluate the presence of the presence of separation of the silver-plating layer with the naked eye. As a result, after 240 hours, the silver-plating film was not peeled off, so that the adhesion of the silver-plating film was good. However, after 500 hours, the silver-plating film was peeled off in an area which was larger than 10 area% with respect to the area of the surface of the silver-plating film on which the adhesive tape was applied.

Two silver-plated products, each of which was the same as the above-described silver-plated product, were prepared to be put in a temperature and humidity testing chamber which was set at a temperature of 85 °C and a humidity of 85 %. After 240 hours and 500 hours, respectively, the 180° adhesion bending of each of the silver-plated products was carried out, and then, the retorsion thereof was carried out. Then, the presence of separation of the silver-plating layer in the bent portions (mountain fold portion and valley fold portion) was evaluated with the naked eye. As a result, after 240 hours, the silver-plating film was not peeled off, so that the adhesion of the silver-plating layer film was good. However, after 500 hours, the silver-plating film was peeled off.

### [Example 2]

A silver-plated product was obtained by the same method as that in Example 1, except that the electroplating (silver-plating) for forming the underlying silver-plating film was carried out at a current density of 2.8 A/dm² for 5 seconds. The thickness of the central portion of the underlying silver-plating film of the silver-plated product thus obtained was measured by means of the above-described X-ray fluorescent analysis thickness meter, so that the thickness was 0.1 *µ* m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 136.1 on average. It was confirmed that the base material was not exposed after the reciprocating sliding movement was repeated 400 times, so that the wear resistance thereof was good. The maximum value of the coefficient of dynamic friction thereof was 0.44. The average crystallite size was 130.6 angstroms (13.06 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 3]

A silver-plated product was obtained by the same method as that in Example 1, except that the electroplating (silver-plating) for forming the underlying silver-plating film was carried out at a current density of 7 A/dm² for 4 seconds. The thickness of the central portion of the underlying silver-plating film of the silver-plated product thus obtained was measured by means of the above-described X-ray fluorescent analysis thickness meter, so that the thickness was 0.2 *µ* m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 132.1 on average. It was confirmed that the base material was not exposed after the reciprocating sliding movement was repeated 400 times, so that the wear resistance thereof was good. The maximum value of the coefficient of dynamic friction thereof was 0.46. The average crystallite size was 118.8 angstroms (11.88 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 4]

A silver-plated product was obtained by the same method as that in Example 1, except that the electroplating (silver-plating) for forming the underlying silver-plating film was carried out at a current density of 7 A/dm² for 9 seconds. The thickness of the central portion of the underlying silver-plating film of the silver-plated product thus obtained was measured by means of the above-described X-ray fluorescent analysis thickness meter, so that the thickness was 0.5 *µ* m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 132.4 on average. It was confirmed that the base material was not exposed after the reciprocating sliding movement was repeated 200 times, so that the wear resistance thereof was good. The maximum value of the coefficient of dynamic friction thereof was 0.34. The average crystallite size was 133.7 angstroms (13.37 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 5]

A silver-plated product was obtained by the same method as that in Example 1, except that the electroplating (silver-plating) for forming the underlying silver-plating film was carried out at a current density of 7 A/dm² for 18 seconds. The thickness of the central portion of the underlying silver-plating film of the silver-plated product thus obtained was measured by means of the above-described X-ray fluorescent analysis thickness meter, so that the thickness was 1.0 *µ* m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 124.1 on average. It was confirmed that the base material was not exposed after the reciprocating sliding movement was repeated 300 times, so that the wear resistance thereof was good. The maximum value of the coefficient of dynamic friction thereof was 0.42. The average crystallite size was 528.1 angstroms (52.81 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 6]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 50 g/L of potassium cyanide (KCN) and 30 g/L of sodium 2-mercaptobenzothiazole (sodium mercaptobenzothiazole (SMBT)) (a silver-plating solution containing 95 g/L of silver, 20 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 400 times, so that the wear resistance thereof was good. The maximum value of the coefficient of dynamic friction thereof was 0.36. The average crystallite size was 139.5 angstroms (13.59 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 7]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 60 g/L of potassium cyanide (KCN) and 30 g/L of sodium 2-mercaptobenzothiazole (sodium mercaptobenzothiazole (SMBT)) (a silver-plating solution containing 95 g/L of silver, 24 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 500 times, so that the wear resistance thereof was good. The maximum value of the coefficient of dynamic friction thereof was 0.38. The average crystallite size was 128.9 angstroms (12.89 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 8]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 70 g/L of potassium cyanide (KCN) and 30 g/L of sodium 2-mercaptobenzothiazole (sodium mercaptobenzothiazole (SMBT)) (a silver-plating solution containing 95 g/L of silver, 28 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 200 times, so that the wear resistance thereof was good. The maximum value of the coefficient of dynamic friction thereof was 0.37. The average crystallite size was 129.7 angstroms (12.97 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 9]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 80 g/L of potassium cyanide (KCN) and 30 g/L of sodium 2-mercaptobenzothiazole (sodium mercaptobenzothiazole (SMBT)) (a silver-plating solution containing 95 g/L of silver, 32 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 300 times, so that the wear resistance thereof was good. The maximum value of the coefficient of dynamic friction thereof was 0.40. The average crystallite size was 132.6 angstroms (13.26 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 10]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 30 g/L of sodium 2-mercaptobenzothiazole (sodium mercaptobenzothiazole (SMBT)) (a silver-plating solution containing 95 g/L of silver, 36 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 500 times, so that the wear resistance thereof was good. The maximum value of the coefficient of dynamic friction thereof was 0.43. The average crystallite size was 135.0 angstroms (13.50 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 11]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 100 g/L of potassium cyanide (KCN) and 30 g/L of sodium 2-mercaptobenzothiazole (sodium mercaptobenzothiazole (SMBT)) (a silver-plating solution containing 95 g/L of silver, 40 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 300 times, so that the wear resistance thereof was good. The maximum value of the coefficient of dynamic friction thereof was 0.39. The average crystallite size was 134.0 angstroms (13.40 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 12]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 110 g/L of potassium cyanide (KCN) and 30 g/L of sodium 2-mercaptobenzothiazole (sodium mercaptobenzothiazole (SMBT)) (a silver-plating solution containing 95 g/L of silver, 44 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 400 times, so that the wear resistance thereof was good. The maximum value of the coefficient of dynamic friction thereof was 0.42. The average crystallite size was 148.7 angstroms (14.87 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 13]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 120 g/L of potassium cyanide (KCN) and 30 g/L of sodium 2-mercaptobenzothiazole (sodium mercaptobenzothiazole (SMBT)) (a silver-plating solution containing 95 g/L of silver, 48 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 400 times, so that the wear resistance thereof was good. The maximum value of the coefficient of dynamic friction thereof was 0.41. The average crystallite size was 142.3 angstroms (14.23 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 14]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 130 g/L of potassium cyanide (KCN) and 30 g/L of sodium 2-mercaptobenzothiazole (sodium mercaptobenzothiazole (SMBT)) (a silver-plating solution containing 95 g/L of silver, 52 g/L of free cyanide and 21 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 300 times, so that the wear resistance thereof was good. The maximum value of the coefficient of dynamic friction thereof was 0.46. The average crystallite size was 141.0 angstroms (14.10 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 15]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 20 g/L of sodium 2-mercaptobenzothiazole (sodium mercaptobenzothiazole (SMBT)) (a silver-plating solution containing 95 g/L of silver, 36 g/L of free cyanide and 14 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 100 times, so that the wear resistance thereof was good. The maximum value of the coefficient of dynamic friction thereof was 0.52. The average crystallite size was 135.7 angstroms (13.57 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 16]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 25 g/L of sodium 2-mercaptobenzothiazole (sodium mercaptobenzothiazole (SMBT)) (a silver-plating solution containing 95 g/L of silver, 36 g/L of free cyanide and 18 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 400 times, so that the wear resistance thereof was good. The maximum value of the coefficient of dynamic friction thereof was 0.49. The average crystallite size was 134.0 angstroms (13.40 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 17]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 35 g/L of sodium 2-mercaptobenzothiazole (sodium mercaptobenzothiazole (SMBT)) (a silver-plating solution containing 95 g/L of silver, 36 g/L of free cyanide and 25 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 500 times, so that the wear resistance thereof was good. The maximum value of the coefficient of dynamic friction thereof was 0.40. The average crystallite size was 115.3 angstroms (11.53 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 18]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 40 g/L of sodium 2-mercaptobenzothiazole (sodium mercaptobenzothiazole (SMBT)) (a silver-plating solution containing 95 g/L of silver, 36 g/L of free cyanide and 29 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 700 times, so that the wear resistance thereof was good. The maximum value of the coefficient of dynamic friction thereof was 0.42. The average crystallite size was 102.1 angstroms (10.21 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 19]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 50 g/L of sodium 2-mercaptobenzothiazole (sodium mercaptobenzothiazole (SMBT)) (a silver-plating solution containing 95 g/L of silver, 36 g/L of free cyanide and 36 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 1000 times, so that the wear resistance thereof was good. The maximum value of the coefficient of dynamic friction thereof was 0.52. The average crystallite size was 109.9 angstroms (10.99 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 20]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 60 g/L of sodium 2-mercaptobenzothiazole (sodium mercaptobenzothiazole (SMBT)) (a silver-plating solution containing 95 g/L of silver, 36 g/L of free cyanide and 43 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ* m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 1000 times, so that the wear resistance thereof was good. The maximum value of the coefficient of dynamic friction thereof was 0.54. The average crystallite size was 126.6 angstroms (12.66 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 21]

A silver-plated product was obtained by the same method as that in Example 3, except that the silver-plating solution used for forming the surface silver-plating film was an aqueous silver-plating solution containing 175 g/L of silver potassium cyanide (KAg(CN)₂), 90 g/L of potassium cyanide (KCN) and 70 g/L of sodium 2-mercaptobenzothiazole (sodium mercaptobenzothiazole (SMBT)) (a silver-plating solution containing 95 g/L of silver, 36 g/L of free cyanide and 50 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ*m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 1000 times, so that the wear resistance thereof was good. The maximum value of the coefficient of dynamic friction thereof was 0.57. The average crystallite size was 128.1 angstroms (12.81 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 22]

A silver-plated product was obtained by the same method as that in Example 1, except that the electroplating (silver-plating) for forming the underlying silver-plating film was carried out at a current density of 7 A/dm² for 36 seconds. The thickness of the central portion of the underlying silver-plating film of the silver-plated product thus obtained was measured by means of the above-described X-ray fluorescent analysis thickness meter, so that the thickness was 2 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 112.3 on average. It was confirmed that the base material was not exposed after the reciprocating sliding movement was repeated 200 times, so that the wear resistance thereof was good. The maximum value of the coefficient of dynamic friction thereof was 0.50. The average crystallite size was 584.1 angstroms (58.41 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 23]

A silver-plated product was obtained by the same method as that in Example 1, except that the electroplating (silver-plating) for forming the underlying silver-plating film was carried out at a current density of 7 A/dm² for 90 seconds. The thickness of the central portion of the underlying silver-plating film of the silver-plated product thus obtained was measured by means of the above-described X-ray fluorescent analysis thickness meter, so that the thickness was 5 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 96.8 on average. It was confirmed that the base material was not exposed after the reciprocating sliding movement was repeated 400 times, so that the wear resistance thereof was good. The maximum value of the coefficient of dynamic friction thereof was 0.52. The average crystallite size was 611.9 angstroms (61.19 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 24]

A silver-plated product was obtained by the same method as that in Example 1, except that the electroplating (silver-plating) for forming the underlying silver-plating film was carried out at a current density of 7 A/dm² for 180 seconds. The thickness of the central portion of the underlying silver-plating film of the silver-plated product thus obtained was measured by means of the above-described X-ray fluorescent analysis thickness meter, so that the thickness was 10 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 92.0 on average. It was confirmed that the base material was not exposed after the reciprocating sliding movement was repeated 400 times, so that the wear resistance thereof was good. The maximum value of the coefficient of dynamic friction thereof was 0.50. The average crystallite size was 625.1 angstroms (62.51 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Comparative Example 1]

A silver-plated product was obtained by the same method as that in Example 1, except that the underlying silver-plating film was not formed.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 139.4 on average. It was confirmed that the base material was not exposed after the reciprocating sliding movement was repeated 400 times, so that the wear resistance thereof was good. The maximum value of the coefficient of dynamic friction thereof was 0.41. The average crystallite size was 146.3 angstroms (14.63 nm).

With respect to the silver-plated product, the presence of separation of the silver-plating film thereof was evaluated with the naked eye by the same methods as those in Example 1. As a result, after the silver-plated product was heated at 350 °C for 1 minute, and after the 180° adhesion bending and retorsion thereof were carried out after the silver-plated product was heated at 350 °C for 1 minute, the silver-plating film was not peeled off, so that the adhesion of the silver-plating film was good. After the silver-plated product was put in the temperature and humidity testing chamber for 240 hours, the silver-plating film was peeled off in an area of larger than 5 area% with respect to the area of the surface of the silver strike plating film, so that the adhesion of the silver-plating film was not good. After the silver-plated product was put in the temperature and humidity testing chamber for 500 hours, the silver-plating film was peeled off in an area of larger 10 area% with respect to the area of the surface of the silver strike plating film, so that the adhesion of the silver-plating film was not good. Moreover, after the 180° adhesion bending and retorsion thereof were carried out after the silver-plated product was put in the temperature and humidity testing chamber for 240 hours, and after the 180° adhesion bending and retorsion thereof were carried out after the silver-plated product was put in the temperature and humidity testing chamber for 500 hours, the silver-plating film was peeled off, so that the adhesion of the silver-plating film was not good.

### [Comparative Example 2]

A silver-plated product was obtained by the same method as that in Example 1, except that the underlying silver-plating film was not formed and that the silver-strike-plated material and a silver electrode plate were used as a cathode and an anode, respectively, to electroplate (silver-plate) the material at a liquid temperature of 18 °C and at a current density of 5 A/dm² for 120 seconds in an aqueous silver-plating solution containing 175 g/L of silver potassium cyanide (KAg(CN)₂), 95 g/L of potassium cyanide (KCN) and 69 mg/L of selenium (Se) (a silver-plating solution containing 95 g/L of silver, 38 g/L of free cyanide and 69 mg/L of selenium). The thickness of the central portion of the silver-plating film of the silver-plated product thus formed was measured by means of the above-described X-ray fluorescent analysis thickness meter. As a result, the thickness was 5 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 132.0 on average. It was confirmed that the base material was exposed after the reciprocating sliding movement was repeated 80 times, so that the wear resistance thereof was not good. The maximum value of the coefficient of dynamic friction thereof was 1.71. The average crystallite size was 278.0 angstroms (27.80 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 25]

A silver-plated product was obtained by the same method as that in Example 3, except that the silver-plating solution used for forming the surface silver-plating film was an aqueous silver-plating solution containing 138 g/L of silver potassium cyanide (KAg(CN)₂), 80 g/L of potassium cyanide (KCN) and 32 g/L of sodium 2-mercaptobenzothiazole (sodium mercaptobenzothiazole (SMBT)) (a silver-plating solution containing 75 g/L of silver, 32 g/L of free cyanide and 23 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 122.6 on average. It was confirmed that the base material was not exposed after the reciprocating sliding movement was repeated 400 times, so that the wear resistance thereof was good. The maximum value of the coefficient of dynamic friction thereof was 0.41. The average crystallite size was 116.0 angstroms (11.60 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 26]

A silver-plated product was obtained by the same method as that in Example 3, except that the silver-plating solution used for forming the surface silver-plating film was an aqueous silver-plating solution containing 240 g/L of silver potassium cyanide (KAg(CN)₂), 100 g/L of potassium cyanide (KCN) and 28 g/L of sodium 2-mercaptobenzothiazole (sodium mercaptobenzothiazole (SMBT)) (a silver-plating solution containing 130 g/L of silver, 40 g/L of free cyanide and 20 g/L of benzothiazole content (BT)). The thickness of the central portion of the silver-plating film (the total of the thicknesses of the central portion of the underlying silver-plating film and the central portion of the surface silver-plating film) of the silver-plated product thus formed was measured by means of the above-described X-ray fluorescent analysis thickness meter. As a result, the thickness was 1.2 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 125.6 on average. It was confirmed that the base material was not exposed after the reciprocating sliding movement was repeated 300 times, so that the wear resistance thereof was good. The maximum value of the coefficient of dynamic friction thereof was 0.48. The average crystallite size was 132.5 angstroms (13.25 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 27]

A silver-plated product was obtained by the same method as that in Example 3, except that the material having the underlying silver-plating film and a silver electrode plate were used as a cathode and an anode, respectively, to electroplate (silver-plate) the material at a liquid temperature of 35 °C and at a current density of 7 A/dm² for 54 seconds in an aqueous silver-plating solution containing 175 g/L of silver potassium cyanide (KAg(CN)₂), 95 g/L of potassium cyanide (KCN) and 30 g/L of sodium 2-mercaptobenzothiazole (sodium mercaptobenzothiazole (SMBT)) (a silver-plating solution containing 95 g/L of silver, 38 g/L of free cyanide and 21 g/L of benzothiazole content (BT)), while stirring the solution at 500 rpm by means of a stirrer. The thickness of the central portion of the silver-plating film of the silver-plated product thus formed was measured by means of the above-described X-ray fluorescent analysis thickness meter. As a result, the thickness was 3.29 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 104.3 on average. It was confirmed that the base material was not exposed after the reciprocating sliding movement was repeated 700 times, so that the wear resistance thereof was good. The maximum value of the coefficient of dynamic friction thereof was 0.35. The average crystallite size was 87.1 angstroms (8.71 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 28]

A silver-plated product was obtained by the same method as that in Example 3, except that the material having the underlying silver-plating film and a silver electrode plate were used as a cathode and an anode, respectively, to electroplate (silver-plate) the material at a liquid temperature of 35 °C and at a current density of 7 A/dm² for 90 seconds in an aqueous silver-plating solution containing 175 g/L of silver potassium cyanide (KAg(CN)₂), 95 g/L of potassium cyanide (KCN) and 30 g/L of sodium 2-mercaptobenzothiazole (sodium mercaptobenzothiazole (SMBT)) (a silver-plating solution containing 95 g/L of silver, 38 g/L of free cyanide and 21 g/L of benzothiazole content (BT)), while stirring the solution at 500 rpm by means of a stirrer. The thickness of the central portion of the silver-plating film of the silver-plated product thus formed was measured by means of the above-described X-ray fluorescent analysis thickness meter. As a result, the thickness was 5.34*µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 92.4 on average. It was confirmed that the base material was not exposed after the reciprocating sliding movement was repeated 1000 times, so that the wear resistance thereof was good. The maximum value of the coefficient of dynamic friction thereof was 0.35. The average crystallite size was 90.39 angstroms (9.039 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 29]

A silver-plated product was obtained by the same method as that in Example 3, except that the pretreated material and a nickel electrode plate were used as a cathode and an anode, respectively, to electroplate (dull-nickel-plate) the material at a liquid temperature of 50 °C and at a current density of 7 A/dm² for 7 seconds in an aqueous dull-nickel-plating solution containing 540 g/L of nickel sulfamate tetrahydrate, 25 g/L of nickel chloride and 35 g/L of boric acid, while stirring the solution at 500 rpm by means of a stirrer, to form a dull-nickel-plating film as an underlying plating film. The thickness of the central portion of the underlying plating film of the silver-plated product thus formed was measured by means of the above-described X-ray fluorescent analysis thickness meter. As a result, the thickness was 0.1*µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 101.8 on average. It was confirmed that the base material was not exposed after the reciprocating sliding movement was repeated 100 times, so that the wear resistance thereof was good. The maximum value of the coefficient of dynamic friction thereof was 0.39. The average crystallite size was 102.53 angstroms (10.253 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 30]

A silver-plated product was obtained by the same method as that in Example 3, except that the pretreated material and a nickel electrode plate were used as a cathode and an anode, respectively, to electroplate (dull-nickel-plate) the material at a liquid temperature of 50 °C and at a current density of 7 A/dm² for 14 seconds in an aqueous dull-nickel-plating solution containing 540 g/L of nickel sulfamate tetrahydrate, 25 g/L of nickel chloride and 35 g/L of boric acid, while stirring the solution at 500 rpm by means of a stirrer, to form a dull-nickel-plating film as an underlying plating film. The thickness of the central portion of the underlying plating film of the silver-plated product thus formed was measured by means of the above-described X-ray fluorescent analysis thickness meter. As a result, the thickness was 0.2 *µ*m.

With respect to the silver-plated product thus obtained, the measurement of the Vickers hardness HV thereof, the evaluation of the wear resistance thereof and the calculation of the crystallite sizes thereof were carried out by the same methods as those in Example 1. As a result, the Vickers hardness HV was 102.3 on average. It was confirmed that the base material was not exposed after the reciprocating sliding movement was repeated 100 times, so that the wear resistance thereof was good. The maximum value of the coefficient of dynamic friction thereof was 0.48. The average crystallite size was 106.79 angstroms (10.679 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 31]

A silver-plated product was obtained by the same method as that in Example 3, except that the pretreated material and a nickel electrode plate were used as a cathode and an anode, respectively, to electroplate (dull-nickel-plate) the material at a liquid temperature of 50 °C and at a current density of 7 A/dm² for 210 seconds in an aqueous dull-nickel-plating solution containing 540 g/L of nickel sulfamate tetrahydrate, 25 g/L of nickel chloride and 35 g/L of boric acid, while stirring the solution at 500 rpm by means of a stirrer, to form a dull-nickel-plating film as an underlying plating film. The thickness of the central portion of the underlying plating film of the silver-plated product thus formed was measured by means of the above-described X-ray fluorescent analysis thickness meter. As a result, the thickness was 3 *µ*m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 300 times, so that the wear resistance thereof was good. The maximum value of the coefficient of dynamic friction thereof was 0.51. The average crystallite size was 157.62 angstroms (15.762 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

### [Example 32]

A silver-plated product was obtained by the same method as that in Example 3, except that the pretreated material and a nickel electrode plate were used as a cathode and an anode, respectively, to electroplate (dull-nickel-plate) the material at a liquid temperature of 50 °C and at a current density of 7 A/dm² for 350 seconds in an aqueous dull-nickel-plating solution containing 540 g/L of nickel sulfamate tetrahydrate, 25 g/L of nickel chloride and 35 g/L of boric acid, while stirring the solution at 500 rpm by means of a stirrer, to form a dull-nickel-plating film as an underlying plating film. The thickness of the central portion of the underlying plating film of the silver-plated product thus formed was measured by means of the above-described X-ray fluorescent analysis thickness meter. As a result, the thickness was 5 *µ*m.

With respect to the silver-plated product thus obtained, the evaluation of the wear resistance thereof and the calculation of the crystallite sizes thereof were carried out by the same methods as those in Example 1. As a result, it was confirmed that the base material was not exposed after the reciprocating sliding movement was repeated 700 times, so that the wear resistance thereof was good. The maximum value of the coefficient of dynamic friction thereof was 0.43. The average crystallite size was 175.15 angstroms (17.515 nm).

With respect to the silver-plated product, the presence of separation of the silver-plating film thereof was evaluated with the naked eye by the same methods as those in Example 1. As a result, after the silver-plated product was heated at 350 °C for 1 minute, after the 180° adhesion bending and retorsion thereof were carried out after the silver-plated product was heated at 350 °C for 1 minute, after the silver-plated product was put in the temperature and humidity testing chamber for 500 hours, and after the 180° adhesion bending and retorsion thereof were carried out after the silver-plated product was put in the temperature and humidity testing chamber for 500 hours, the silver-plating film was not peeled off, so that the adhesion of the silver-plating film was good.

The producing conditions and characteristics of the silver-plated products obtained in these examples and comparative examples are shown in Tables 1 through 4.

**Table 1**

| | Thickness of Underlying Nickel-Plating Film (µm) | Thickness of Underlying Silver-Plating Film (µm) | Surface Layer Silver-Plating Film | | | | | Thickness of Surface Layer Silver-Plating Film (µm) |
|---|---|---|---|---|---|---|---|---|
| | | | Silver-Plating Solution | | Plating Conditions | | | |
| | | | Free Cyanide (g/L) | BT (g/L) | Liquid Temp. (°C) | Current Density (A/dm²) | Time (sec.) | |
| Ex.1 | 1 | 0.06 | 38 | 21 | 35 | 7 | 18 | 1 |
| Ex.2 | 1 | 0.1 | 38 | 21 | 35 | 7 | 18 | 1 |
| Ex,3 | 1 | 0.2 | 38 | 21 | 35 | 7 | 18 | 1 |
| Ex.4 | 1 | 0.5 | 38 | 21 | 35 | 7 | 18 | 1 |
| Ex.5 | 1 | 1.0 | 38 | 21 | 35 | 7 | 18 | 1 |
| Ex.6 | 1 | 0.2 | 20 | 21 | 35 | 7 | 18 | 1 |
| Ex.7 | 1 | 0.2 | 24 | 21 | 35 | 7 | 18 | 1 |
| Ex.8 | 1 | 0.2 | 28 | 21 | 35 | 7 | 18 | 1 |
| Ex.9 | 1 | 0.2 | 32 | 21 | 35 | 7 | 18 | 1 |
| Ex.10 | 1 | 0.2 | 36 | 21 | 35 | 7 | 18 | 1 |
| Ex.11 | 1 | 0.2 | 40 | 21 | 35 | 7 | 18 | 1 |
| Ex. 12 | 1 | 0.2 | 44 | 21 | 35 | 7 | 18 | 1 |
| Ex.13 | 1 | 0.2 | 48 | 21 | 35 | 7 | 18 | 1 |
| Ex.14 | 1 | 0.2 | 52 | 21 | 35 | 7 | 18 | 1 |
| Ex. 15 | 1 | 0.2 | 36 | 14 | 35 | 7 | 18 | 1 |
| Ex.16 | 1 | 0.2 | 36 | 18 | 35 | 7 | 18 | 1 |
| Ex.17 | 1 | 0.2 | 36 | 25 | 35 | 7 | 18 | 1 |
| Ex.18 | 1 | 0.2 | 36 | 29 | 35 | 7 | 18 | 1 |
| Ex.19 | 1 | 0.2 | 36 | 36 | 35 | 7 | 18 | 1 |
| Ex.20 | 1 | 0.2 | 36 | 43 | 35 | 7 | 18 | 1 |
| Ex.21 | 1 | 0.2 | 36 | 50 | 35 | 7 | 18 | 1 |
| Ex.22 | 1 | 2 | 38 | 21 | 35 | 7 | 18 | 1 |
| Ex,23 | 1 | 5 | 38 | 21 | 35 | 7 | 18 | 1 |
| Ex.24 | 1 | 10 | 38 | 21 | 35 | 7 | 18 | 1 |
| Comp.1 | 1 | 0 | 38 | 21 | 35 | 7 | 18 | 1 |
| Comp.2 | 1 | 0 | 38 | - | 18 | 5 | 120 | 5 |

**Table 2**

| | Vickers Hardness HV | Number of Durable Times (Number of Times) | Coefficient of Dynamic Friction | Average Crystallite Size (nm) |
|---|---|---|---|---|
| Ex.1 | 139.2 | 400 | 0.39 | 16.16 |
| Ex.2 | 136.1 | 400 | 0.44 | 13.06 |
| Ex.3 | 132.1 | 400 | 0.46 | 11.88 |
| Ex.4 | 132.4 | 200 | 0.34 | 13.37 |
| Ex.5 | 124.1 | 300 | 0.42 | 52.81 |
| Ex.6 | - | 400 | 0.36 | 13.95 |
| Ex.7 | - | 500 | 0.38 | 12.89 |
| Ex.8 | - | 200 | 0.37 | 12.97 |
| Ex.9 | - | 300 | 0.40 | 13.26 |
| Ex.10 | - | 500 | 0.43 | 13.50 |
| Ex.11 | - | 300 | 0.39 | 13.40 |
| Ex.12 | - | 400 | 0.42 | 14.87 |
| Ex.13 | - | 400 | 0.41 | 14.23 |
| Ex.14 | - | 300 | 0.46 | 14.10 |
| Ex.15 | - | 100 | 0.52 | 13.57 |
| Ex.16 | - | 400 | 0.49 | 13.40 |
| Ex.17 | - | 500 | 0.40 | 11.53 |
| Ex.18 | - | 700 | 0.42 | 10.21 |
| Ex.19 | - | Not lower than 1000 | 0.52 | 10.99 |
| Ex.20 | - | Not lower than 1000 | 0.54 | 12.66 |
| Ex.21 | - | Not lower than 1000 | 0.57 | 12.81 |
| Ex.22 | 112.3 | 200 | 0.50 | 58.41 |
| Ex.23 | 96.8 | 400 | 0.52 | 61.19 |
| Ex.24 | 92.0 | 400 | 0.50 | 62.51 |
| Comp.1 | 139.4 | 400 | 0.41 | 14.63 |
| Comp.2 | 132.0 | 80 | 1.71 | 27.80 |

**Table 3**

| | Thickness of Underlying Nickel-Plating Film (µm) | Thickness of Underlying Silver-Plating Film (µm) | Surface Layer Silver-Plating Film | | | | | Thickness of Surface Layer Silver-Plating Film (µm) |
|---|---|---|---|---|---|---|---|---|
| | | | Silver-Plating Solution | | Plating Conditions | | | |
| | | | Free Cyanide (g/L) | BT (g/L) | Liquid Temp. (°C) | Current Density (A/dm²) | Time (sec.) | |
| Ex.25 | 1 | 0.2 | 32 | 23 | 35 | 7 | 18 | 1 |
| Ex.26 | 1 | 0.2 | 40 | 20 | 35 | 7 | 18 | 1 |
| Ex.27 | 1 | 0.2 | 38 | 21 | 35 | 7 | 54 | 3 |
| Ex.28 | 1 | 0.2 | 38 | 21 | 35 | 7 | 90 | 5 |
| Ex.29 | 0.1 | 0.2 | 38 | 21 | 35 | 7 | 18 | 1 |
| Ex.30 | 0.2 | 0.2 | 38 | 21 | 35 | 7 | 18 | 1 |
| Ex.31 | 3 | 0.2 | 38 | 21 | 35 | 7 | 18 | 1 |
| Ex.32 | 5 | 0.2 | 38 | 21 | 35 | 7 | 18 | 1 |

**Table 4**

| | Vickers Hardness HV | Number of Durable Times (Number of Times) | Coefficient of Dynamic Friction | Average Crystallite Size (nm) |
|---|---|---|---|---|
| Ex.25 | 122.6 | 400 | 0.41 | 11.60 |
| Ex.26 | 125.6 | 300 | 0.48 | 13.25 |
| Ex.27 | 104.3 | 700 | 0.35 | 8.71 |
| Ex.28 | 92.4 | Not lower than 1000 | 0.35 | 9.04 |
| Ex.29 | 101.8 | 100 | 0.39 | 10.25 |
| Ex.30 | 102.3 | 100 | 0.48 | 10.28 |
| Ex.31 | - | 300 | 0.51 | 15.76 |
| Ex.32 | - | 700 | 0.43 | 17.52 |

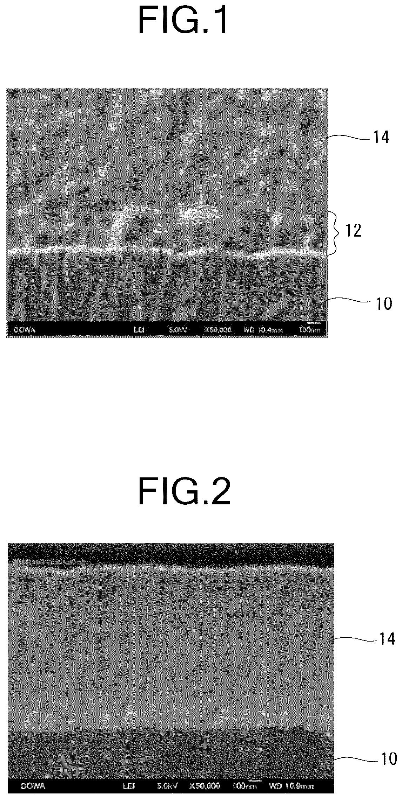

The cross-section of each of the silver-plated products obtained in Examples 10, 15 and 21, and Comparative Examples 1 and 2 was observed by means of a scanning electron microscope. The scanning electron micrographs (SEM images) (magnification of 50,000) of the silver-plated products obtained in Example 10 and Comparative Example 1 are shown FIG. 1 and FIG. 2, respectively. As a result, it was confirmed in the silver-plated products obtained in Examples 10, 15 and 21 that the underlying plating film (dull-nickel-plating film) 10 was formed on the surface of the base material, that the underlying silver-plating film 12 was formed on the underlying plating film 10, and that the surface layer 14 of silver containing carbon (C) and sulfur (S) (the silver-plating film containing carbon and sulfur) was formed on the underlying silver-plating film 12. On the other hand, it was confirmed in the silver-plated product obtained in Comparative Example 1 that the underlying plating film (dull-nickel-plating film) 10 was formed on the surface of the base material, and that the surface layer 14 of silver containing carbon (C) and sulfur (S) (the silver-plating film containing carbon and sulfur) was formed on the underlying plating film 10. Furthermore, in the silver-plated product obtained in Comparative Example 2, the surface layer of silver containing a very small amount of selenium (Se) (the silver-plating film containing a very small amount of selenium) was formed in place of the surface layer 14 of silver containing carbon (C) and sulfur (S) (the silver-plating film containing carbon and sulfur) .

Each of the silver-plated products obtained in Examples 10, 15, 21, 25 and 26 was measured by the X-ray photoelectron spectroscopy (XPS) to obtain a depth profile (showing the results of composition analysis along the depth direction from the outermost surface).

As a result, in the central portion in thickness directions of the surface layer 14 of silver containing carbon and sulfur, the atomic concentration of Ag was not greater 95 at% (89.3 at% in Example 10, 92.7 at% in Example 15, 83.6 at% in Example 21, 85.0 at% in Example 25, and 92. 6 at% in Example 26). The atomic concentration of S was not less than 0.6 at% (1.3 at% in Example 10, 0.8 at% in Example 15, 2.5 at% in Example 21, 1.8 at% in Example 25, and 1.0 at% in Example 26). The percentage of the atomic concentration of C to the atomic concentration of Ag was not less than 3 % (9.7 % in Example 10, 6.3 % in Example 15, 14,1 % in Example 21, 13.9 % in Example 25, and 6.4 % in Example 26). Furthermore, Se was not detected (the atomic concentration of Se was lower than 0.014 at% (0.01 mass%)).

On the other hand, in the central portion in thickness directions of the underlying silver-plating film 12, the atomic concentration of Ag was higher than 95 at% (98.5 at% in Example 10, 97.3 at% in Example 15, 98.5 at% in Example 21, 97.1 at% in Example 25, and 98.4 at% in Example 26). The atomic concentration of S was lower than 0.6 at% (0.5 at% in Example 10, 0.3 at% in Example 15, 0.2 at% in Example 21, 0.2 at% in Example 25, and 0.2 at% in Example 26). The percentage of the atomic concentration of C to the atomic concentration of Ag was lower than 3 % (0.4 % in Example 10, 1.3 % in Example 15, 0.6 % in Example 21, 1.2 % in Example 25, 0.8 % in Example 26). Furthermore, Se was not detected (the atomic concentration of Se was lower than 0.014 at% (0.01 mass%)).

Each of the silver-plated products obtained in Comparative Examples 1 and 2 was measured by the X-ray photoelectron spectroscopy (XPS) to obtain a depth profile (showing the results of composition analysis along the depth direction from the outermost surface). As a result, in the central portion in thickness directions of the surface layer 14 of silver, the atomic concentration of Ag was 90.2 at% in Comparative Example 1, and 99.6 at% in Comparative Example 2. The atomic concentration of S was 1.2 at% in Comparative Example 1, and 0.0 at% in Comparative Example 2. The percentage of the atomic concentration of C to the atomic concentration Ag was 8.8 % in Comparative Example 1, and 0.3 % in Comparative Example 2.

Furthermore, in the measurement by means of the X-ray photoelectron spectroscopy (XPS), an X-ray photoelectron spectrophotometric analyzer (PHI5000 VersaProbeIII produced by ULVAC-PHI, INC.) was used for analyzing the concentrations of C, O, S, Ag, K, Ni and N as specified elements to examine the structure of the silver-plated product. The measurement by means of the X-ray photoelectron spectroscopy (XPS) was carried out on X-ray irradiation conditions containing an ultimate vacuum of 10⁻⁷ Pa, an excitation source of monochromatized AlK*α*, an output of 25 W, an acceleration voltage of 15 kV, a beam size of 100 *µ*m *φ* and an incident angle of 90 deg, by setting a photoelectron take-off angle of 45 deg, a cumulative number of 5, an integration time of 40 ms (20ms x 2), a pass energy of 140 eV and a measurement energy interval of 0.25 eV/step, while an electron neutralization gun was used for irradiating electron beams at an emission current of 20 *µ*A, a bias voltage of 1.0 V and an acceleration voltage of 30.0 V and while an argon gun was used for irradiating argon ions as ion species of Ar⁺ at an acceleration voltage of 0.11 kV and an emission current of 7 mA.

The depth profile was obtained by means of an argon ion gun for carrying out the ion sputtering using ion species of Ar⁺ at an acceleration voltage of 4 kV, an emission current of 20 mA and a sweeping area of 2.7 mm x 2.7 mm, to carry out the surface etching (for analysis in depth directions) to alternatively repeat the surface etching and the measurement by means of the X-ray photoelectron spectroscopy (XPS).

Furthermore, in the depth profile, the peak of the binding energy on the 3d orbital of Ag (Ag3d) was in the range of from 362.0 eV to 382.0 eV, the peak of the binding energy on the Is orbital of C (C1s) was in the range of from 278.0 eV to 308.0 eV, and the peak of the binding energy on the 2p orbital of S (S2p) was in the range of from 156 eV to 170 eV. From these peaks, the atomic concentrations of Ag, C and S were obtained.

In order to examine the binding conditions of S in the silver-plated products obtained Examples 25 and 26, the same measurement as the above-described measurement by means of the X-ray photoelectron spectroscopy (XPS) was carried out, except that there were set a cumulative number of 10, an integration times of 80 ms (20ms x 4), a pass energy of 69 eV and a measurement energy interval of 0.1250 eV/step with respect to C and that there were set a measuring range of from 155.0 eV to 175.0 eV, a cumulative number of 15, an integration times of 80 ms (20ms x 4), a pass energy of 69 eV and a measurement energy interval of 0.1250 eV/step with respect to S.

As a result, in the silver-plated products obtained in Examples 25 and 26, it was confirmed that the peaks of the binding energy of the 2p orbital of S (S2p) were in three ranges being a range of from 160.4 eV to 161.4 eV, a range of from 161.6 eV to 162.9 eV and a range of from 163.2 eV to 164.5 eV. Furthermore, if the measurement by means of the X-ray photoelectron spectroscopy (XPS) was carried out with respect to the silver-plating layer containing the SMBT, it was confirmed that the peaks of the binding energy of the 2p orbital of S (S2p) were in the above-described three ranges. Therefore, with respect to the silver-plated products obtained in Examples 25 and 26, it is considered that the peak in the range of from 161.6 eV to 162.9 eV in the measurement by means of the X-ray photoelectron spectroscopy (XPS) is a peak derived from the element S of the mercapto group of the SMBT, that the peak in the range of from 163.2 eV to 164.5 eV is a peak derived from the element S of the five membered ring of the SMBT, and that the peak in the range of from 160.4 eV to 161.4 eV is a peak derived from the element S other than the above-described elements S.

In the central portion in thickness directions of the surface layer 14 of silver containing carbon and sulfur with respect to the silver-plated product obtained in Example 25, the atomic concentration of S derived from the atom S of the mercapto group of the SMBT was 0.4 at%, and the atomic concentration of S derived from the atom S of the five membered ring of the SMBT was 0.6 at%, the total of the atomic concentration of S derived from the atom S of the mercapto group of the SMBT and the atomic concentration of S derived from the atom S of the five membered ring of the SMBT being 1.0 at%, and the atomic concentration of the other S being 0.8 at%. In the central portion in thickness directions of the surface layer 14 of silver containing carbon and sulfur with respect to the silver-plated product obtained in Example 26, the atomic concentration of S derived from the atom S of the mercapto group of the SMBT was 0.3 at%, and the atomic concentration of S derived from the atom S of the five membered ring of the SMBT was 0.2 at%, the total of the atomic concentration of S derived from the atom S of the mercapto group of the SMBT and the atomic concentration of S derived from the atom S of the five membered ring of the SMBT being 0.5 at%, and the atomic concentration of the other S being 0.5 at%. Thus, in the surface layer 14 of silver containing carbon and sulfur with respect to the silver-plated products obtained in Examples 25 and 26, the total of the atomic concentration of S derived from the atom S of the mercapto group of the SMBT and the atomic concentration of S derived from the atom S of the five membered ring of the SMBT was not less than 0.3 at%, so that it was confirmed that S derived from the SMBT existed in the surface layer 14 of silver containing carbon and sulfur.

On the other hand, in the central portion in thickness directions of the underlying silver-plating film 12 with respect to the silver-plated product obtained in Example 25, the atomic concentration of S derived from the atom S of the mercapto group of the SMBT was 0.0 at%, and the atomic concentration of S derived from the atom S of the five membered ring of the SMBT was 0.1 at%, the total of the atomic concentration of S derived from the atom S of the mercapto group of the SMBT and the atomic concentration of S derived from the atom S of the five membered ring of the SMBT being 0.1 at%, and the atomic concentration of the other S being 0.1 at%. In the central portion in thickness directions of the underlying silver-plating film 12 with respect to the silver-plated product obtained in Example 26, the atomic concentration of S derived from the atom S of the mercapto group of the SMBT was 0.0 at%, and the atomic concentration of S derived from the atom S of the five membered ring of the SMBT was 0.1 at%, the total of the atomic concentration of S derived from the atom S of the mercapto group of the SMBT and the atomic concentration of S derived from the atom S of the five membered ring of the SMBT being 0.1 at%, and the atomic concentration of the other S being 0.1 at%. Thus, in the underlying silver-plating film 12 with respect to the silver-plated products obtained in Examples 25 and 26, the total of the atomic concentration of S derived from the atom S of the mercapto group of the SMBT and the atomic concentration of S derived from the atom S of the five membered ring of the SMBT was less than 0.3 at%, so that it was a value within an error range (a value near the measurement limit).

With respect to the silver-plated products obtained in Examples 3, 29 and 30, cracks in the silver-plating film was observed by means of an optical microscope while each of the silver-plated products was bent to 90 degrees at a bend radius R = 3 mm. As a result, in the silver-plated product obtained in Example 3, small cracks practically having no problem were observed, and in the silver-plated products obtained in Examples 29 and 30, cracks were smaller than those in Example 3. It can be seen from these examples that the thickness of the underlying nickel film is preferably about 0.05 to 1.5 *µ*m when the silver-plated product is severely bent.

### Description of Reference Numbers

- 10: Underlying Plating Film
- 12: Underlying Silver-Plating Film
- 14: Surface Layer of Silver (Silver-Plating Film)

## Claims

1. A method for producing a silver-plated product, the method comprising the steps of:
preparing a silver-plating solution which is an aqueous solution containing silver potassium cyanide or silver cyanide, potassium cyanide or sodium cyanide, and a benzothiazole or a derivative thereof;
forming an underlying silver-plating film on a base material via an underlying plating film; and
forming a surface layer of silver on the underlying silver-plating film by electroplating in the prepared silver-plating solution, the surface layer containing carbon and sulfur.

2. A method for producing a silver-plated product as set forth in claim 1, wherein said underlying silver-plating film has a thickness of 0.06 to 15 *µ*m.

3. A method for producing a silver-plated product as set forth in claim 1, wherein said benzothiazole is a mercaptobenzothiazole.

4. A method for producing a silver-plated product as set forth in claim 1, wherein said derivative of the benzothiazole is an alkali metallic salt of the benzothiazole.

5. A method for producing a silver-plated product as set forth in claim 4, wherein said alkali metallic salt is a sodium salt.

6. A method for producing a silver-plated product as set forth in claim 1, wherein said underlying plating film is made of copper, nickel or an alloy thereof.

7. A method for producing a silver-plated product as set forth in claim 1, wherein said base material is made of copper or a copper alloy.

8. A silver-plated product comprising:
a base material;
an underlying plating film formed on the base material;
an underlying silver-plating film formed on the underlying plating film; and
a surface layer of silver on the underlying silver-plating film, the surface layer containing carbon and sulfur,
wherein an atomic concentration of Ag in the underlying silver-plating film is higher than 95 at%, and an atomic concentration of S in the underlying silver-plating film is lower than 0.6 at%, a percentage of an atomic concentration of C to the atomic concentration of Ag in the underlying silver-plating film being lower than 3 %, and
wherein an atomic concentration of Ag in the surface layer of silver containing carbon and sulfur is not higher than 95 at%, and an atomic concentration of S in the surface layer of silver containing carbon and sulfur is not lower than 0.6 at%, a percentage of an atomic concentration of C to the atomic concentration of Ag in the surface layer of silver containing carbon and sulfur being not lower than 3 %.

9. A silver-plated product as set forth in claim 8, wherein said underlying silver-plating film has a thickness of 0.06 to 15 *µ*m.

10. A silver-plated product as set forth in claim 8, wherein an average crystallite size of silver in the silver-plated product is not greater than 100 nm.

11. A silver-plated product as set forth in claim 8, wherein a surface of the silver-plated product has a Vickers hardness HV of 70 to 160.

12. A silver-plated product as set forth in claim 8, wherein said underlying plating film is made of copper, nickel or an alloy thereof.

13. A silver-plated product as set forth in claim 8, wherein said base material is made of copper or a copper alloy.

14. A silver-plated product as set forth in claim 8, wherein the total of the atomic concentration of S derived from a mercapto group of a sodium mercaptobenzothiazole in the surface layer of silver containing carbon and sulfur and the atomic concentration of S derived from a five membered ring of the sodium mercaptobenzothiazole therein is not lower than 0.3 at%, and the total of the atomic concentration of S derived from a mercapto group of the sodium mercaptobenzothiazole in the underlying silver-plating film and the atomic concentration of S derived from a five membered ring of the sodium mercaptobenzothiazole therein is lower than 0.3 at%.

15. A silver-plated product as set forth in claim 8, wherein the total of the atomic concentration of S obtained from spectra, which have a peak in a range of from 161.6 eV to 162.9 eV, and the atomic concentration of S obtained from spectra, which have a peak in a range of from 163.2 eV to 164.5 eV, is not lower than 0.3 at%, when said surface layer of silver containing carbon and sulfur are measured by the X-ray photoelectron spectroscopy, and wherein the total of the atomic concentration of S obtained from spectra, which have a peak in a range of from 161.6 eV to 162.9 eV, and the atomic concentration of S obtained from spectra, which have a peak in a range of from 163.2 eV to 164.5 eV, is lower than 0.3 at%, when said underlying silver-plating film are measured by the X-ray photoelectron spectroscopy.
